# EUROPEAN PATENT APPLICATION

(11) **EP 4 293 561 A1**
(43) Date of publication of application: **20.12.2023**
(21) Application number: 22179699.8
(22) Date of filing: 17.06.2022
(51) Int. Cl.: G06F 30/12, G06F 30/13

(54) **A METHOD FOR INSTALLATION OF AN ACOUSTICAL SYSTEM IN A ROOM**

(71) Applicant: Saint-Gobain Ecophon AB, 260 61 Hyllinge (SE)
(72) Inventor: CHIGOT, Pierre, 254 51 Helsingborg (SE); ACHARD, Frédéric, 93400 Saint-Ouen (FR); YALAOUI, Bessaou, 78400 Chatou (FR)
(74) Representative: AWA Sweden AB

(57) **Abstract**

The present invention relates to a method for installation of an acoustical system in a room of a building defined by structural surfaces, wherein the acoustical system is intended to be attached to at least one structural surface of the structural surfaces of the room, the method comprising acquiring a room geometry by scanning the room and/or by retrieving the room geometry data from a building information model (BIM), determining the acoustical characteristics of the structural surfaces defining the room, calculating, based on the acoustical characteristics and room geometry, a required acoustical characteristic of the acoustical system for obtaining a desired acoustical environment in the room, selecting acoustical elements for obtaining the required acoustical characteristics, creating an installation layout based on the selected acoustical elements, projecting, by means of a laser projector, an installation guiding projection, based on the installation layout, on the at least one structural surface for guiding the installation of the acoustical system.

## Description

### Filed of the Invention

The present invention generally relates to a method, a computer implemented method and a computer program for installation of an acoustical system in a room.

### Background of the Invention

Acoustical systems may be installed in rooms in order to alter the acoustical characteristics of the room. Such systems often consist of panels of materials with different acoustical properties. Although panels may have properties with high acoustical reflection this is not common for acoustical absorbent systems. Most commonly acoustical systems only comprise panels with high acoustical absorption. However, a room having a very high level of acoustical absorption is not necessarily desirable as this is a very unnatural environment which for humans is uncomfortable to be in Most often acoustical systems have panels which are placed on the ceiling of the room, but panels are also often placed on the walls as well. Other alternatives are rugs or other materials placed on the floor and freestanding or hanging devices. Panels installed on the ceilings or walls can be placed such that they overlap each other with respect to the ceiling or wall.

Depending on the intended use of a room a different acoustical characteristic is desired. Thus, an acoustical system installed in the room should be such that the desired acoustical characteristics is achieved. Further, both the geometry of the room and the materials of the structural surfaces of the room give rise to different acoustical characteristics.

Thus, the acoustical system may be unique for each room and the installation of the system will therefore also be unique. Further, as a system normally comprises a number of different elements of different shapes and characteristics which are placed at unique positions in the room to achieve a preferred acoustic environment, such installations can be complicated as they might solely adapt to the building's geometry to cover a given area with a modular uniform system. Furthermore, they can be quite time consuming.

Therefore, there is a need for improved methods of installation of the acoustical system.

### Summary of the invention

In view of the above it is an object of the invention to provide an improved method for installation of an acoustical system in a room which alleviates at least some of the problems with existing installation methods, such as a method which makes it quicker and simpler to install the acoustical system in a room.

According to a first aspect, a method is provided for installation of an acoustical system in a room of a building defined by structural surfaces, wherein the acoustical system is intended to be attached to at least one structural surface of the structural surfaces of the room. The method comprises: acquiring a room geometry by scanning, for instance by means of a laser measuring device, the room and/or by retrieving room geometry data from a building information model (BIM); determining the acoustical characteristics of the structural surfaces defining the room; calculating, based on the acoustical characteristics and room geometry, a required acoustical characteristic of the acoustical system for obtaining a desired acoustical environment in the room; selecting acoustical elements for obtaining the required acoustical characteristics; creating an installation layout based on the selected acoustical elements; projecting, by means of a laser projector, an installation guiding projection, based on the installation layout, on the at least one structural surface for guiding the installation of the acoustical system.

This is advantageous in that this method both is simpler and quicker to install the system in the room compared to known methods of today. Further, the acoustical system can be placed on a ceiling, wall, floor or any combinations thereof. Further, the structural surfaces of the room may be any of a ceiling, wall, floor or other objects in the room such as already installed acoustical elements and/or HVAC equipment.

The acoustical system may be an acoustical absorbing system, and/or comprise any of an acoustical absorbing element, an acoustical reflective element and/or an acoustical diffusion element, or any combinations thereof.

According to a second aspect, a computer implemented method is provided for projecting a guiding projection of an acoustical system in a room of a building defined by structural surfaces, wherein the acoustical system is intended to be attached to at least one structural surface of the structural surfaces of the room. The computer implemented method comprises acquiring a room geometry by scanning the room and/or by retrieving the room geometry data from a building information model (BIM);
determining the acoustical characteristics of the structural surfaces defining the room; calculating, based on the acoustical characteristics and room geometry, a required acoustical characteristic of the acoustical system for obtaining a desired acoustical environment in the room;
selecting acoustical elements for obtaining the required acoustical characteristics; creating an installation layout based on the selected acoustical elements; projecting, by means of a laser projector, an installation guiding projection, based on the installation layout, on the at least one structural surface for guiding the installation of the acoustical system.

According to a third aspect, a computer program having instructions which when executed by an electronic device cause the electronic device to perform a method for projecting a guiding projection as described above is provided.

According to a fourth aspect, a computer readable medium having stored thereon a computer program according a method for projecting a guiding projection as described above is provided.

Further examples of the disclosure are defined in the dependent claims, wherein features for the third and subsequent aspects of the disclosure are as for the first to fourth aspects mutatis mutandis.

Some examples of the disclosure provide for an installation guiding projection comprising a fixation point, size, an identification number, a relationship, a context, a cable suspension length, a color, a surface pattern and/or a position associated with at least one of said acoustical element. Further, the installation guiding projection may in addition and/or alternatively also comprise, HVAC installation information, luminaire or lighting information, wiring information for the luminaire, audio, electrical and so on.

Some examples of the disclosure provide for projecting in sequence a plurality of projections for guiding step by step an installation of an acoustical system.

Some examples of the disclosure provide for a verification projection on at least one of an acoustical element, wherein the verification projection is indicative of the position of the at least one of said acoustical elements in accordance with the installation layout.

Some examples of the disclosure provide for a verification projection on at least one of an acoustical element subsequent to projecting the guiding projection, wherein the verification projection is indicative of the position of the at least one of said acoustical elements in accordance with the installation layout.

Some examples of the disclosure provide for determining of acoustical characteristics of a structural surface of a room.

Some examples of the disclosure provide for determining an absorption coefficient, air flow resistance, air flow resistivity, diffusivity and/or diffusion of each structural surface of a room.

Some examples of the disclosure provide for a desired acoustical environment of a room.

Some examples of the disclosure provide for a reverberation time, speech clarity, auditory sound strength and/or sound propagation.

A further scope of applicability of the present disclosure will become apparent from the detailed description given below and the accompanying drawings. However, it should be understood that the detailed description and specific examples, while indicating preferred variants of the present inventive concept, are given by way of illustration only, since various changes and modifications within the scope of the inventive concept will become apparent to those skilled in the art from this detailed description.

Hence, it is to be understood that this inventive concept is not limited to the particular steps of the methods described or component parts of the systems described as such method and system may vary. It is also to be understood that the terminology used herein is for purpose of describing particular embodiments only and is not intended to be limiting. It must be noted that, as used in the specification and the appended claim, the articles "a", "an", "the", and "said" are intended to mean that there are one or more of the elements unless the context clearly dictates otherwise. Thus, for example, reference to "a device" or "the device" may include several devices, and the like. Furthermore, the words "comprising", "including", "containing" and similar wordings do not exclude other elements or steps.

### Brief description of the drawings

The aspects of the inventive concept, including its particular features and advantages, will be readily understood from the following detailed description and the accompanying drawings, in which:
Fig. 1 is a flowchart for a method for installation of an acoustical system based on an installation guiding projection.
Fig. 2 illustrates an installation guiding projection in a ceiling.
Fig. 3 illustrates an example of an installation guiding projection based on a laser layout projection system.
Fig. 4 conceptually illustrates different steps in an installation of an acoustical system based on an installation guiding projection.

### Detailed description

The present inventive concept will now be described more fully hereinafter with reference to the accompanying drawings, in which preferred variants of the inventive concept are illustrated and discussed. This inventive concept may, however, be embodied in many different forms and should not be construed as limited to the variants set forth herein; rather, these variants are provided for thoroughness and completeness, and fully convey the scope of the inventive concept to the skilled person. Like reference numerals refer to like elements throughout the description.

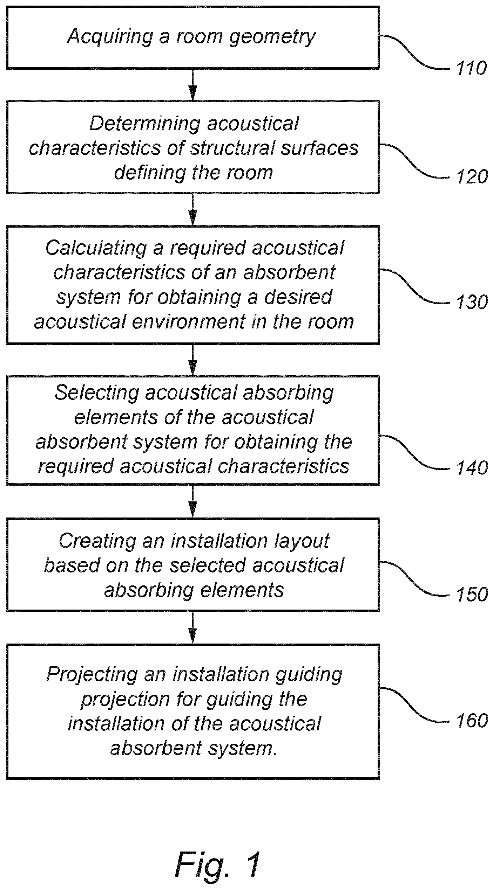

Fig. 1 is a flowchart of a method for installation of an acoustical system in a room of a building defined by structural surfaces, wherein the acoustical system is intended to be attached to at least one structural surface of the structural surfaces of the room. The method comprises acquiring a room geometry 110 by scanning the room and/or by retrieving the room geometry data from a building information model (BIM) and determining the acoustical characteristics of the structural surfaces defining the room 120. The scanning 110 and/or determination of the acoustical characteristics of the room 120 can be performed by a 3D scanning device such as a total station, laser scanning device, extracted from an image and/or a set of images. The structural surface can be any of a ceiling, floor or a wall or any combinations thereof.

In other words, a digital twin of the room can be created that comprises the room geometry and the acoustical characteristics of the structural surfaces defining the room. The information in the digital twin can be acquired by physically measuring and/or obtained from the building information model. Other sources may also be used for acquire information such as architectural drawings, occupancy information, acoustical databases and/or material databases. It would also be possible to combine the physical measurements with information from the building information model to create, verify and/or further improve the digital twin or digital model. For example, the building information model can be used to obtain the room geometry and physical measurements can be used to determine the structural surfaces of the room, and which then are combined in the digital twin.

Further, the method comprises calculating 130, based on the determined acoustical characteristics and room geometry, a required acoustical characteristic of the acoustical system for obtaining a desired acoustical environment in the room. Based on the desired acoustical environment of the room, that can be chosen by for example a client or due to standards and requirements for a specific room type such as a classroom, when the acoustical system is installed, the acoustical system is calculated, and optimized given desired parameters connected to the desired acoustical environment. The desired connected parameters can be various room acoustic parameters such as for example reverberation time, speech clarity and/or sound strength.

Further, based on the calculation 130 the method comprises selecting acoustical elements 140 for obtaining the required acoustical characteristics and creating an installation layout 150 based on the selected acoustical elements. Based on the available acoustical elements and the acoustical elements property, the selection 140 is optimized to achieve as good fit to the required acoustical characteristics.

The above steps may be performed separately and/or in combination both in time and/or location. For example, the acquiring of the room geometry 110 can be performed by a designer for the acoustical system by going to the room and measure. The designer may then determine 120, calculate 130, select the acoustical system 140 and create the installation layout 150 at a computer in the designer's office. In another example, the designer has brought a tablet and determines 120, calculates, selects the acoustical system 140 and creates the installation layout 150 at the room. In another example, the designer acquires the room geometry 110 from a building information model, determines 120, calculates 130, selects the acoustical system 140 and creates the installation layout 150 at the office.

When the acoustical system is selected 140 and the installation layout 150 is created, an installation guiding projection, can be projected 160, by means of a laser projector, based on the installation layout, on the at least one structural surface for guiding the installation of the acoustical system. In another example, the created installation layout 150 can be viewed in a virtual reality setting or in an augmented reality setting. This could be done so that the installation layout can be verified before installation and/or to allow for a full experience of the room when fitted with the selected acoustical system.

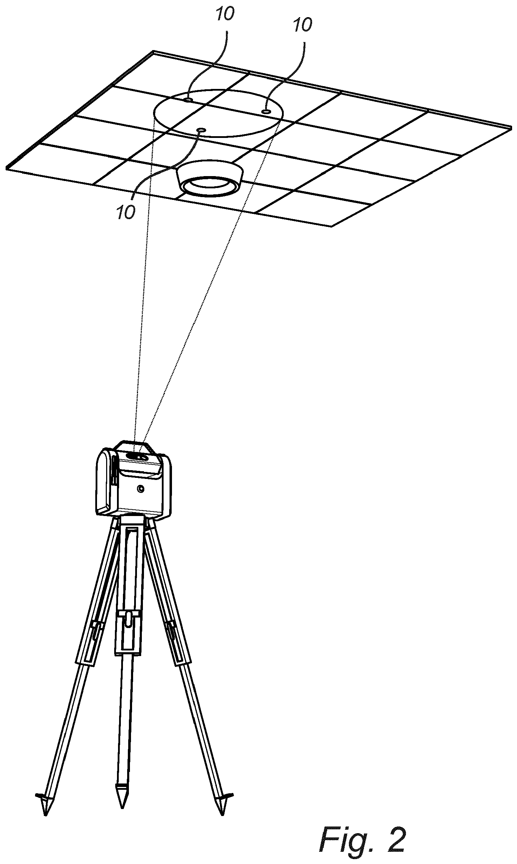

Illustrated in figure 2 is an example of the installation guiding projection by the laser projector. Figure 2 illustrates the installation guiding projection comprising three markers 10 showing where to put in fixers for the acoustical element in the ceiling. It can also be seen that there is a light fixture and that may be used as a reference point for the installation guiding projection. Other reference points can of course also be used so that the installation guiding projection becomes as correct as possible throughout the installation. Further, the information or data comprising the installation guiding projection may be projected by for example a wired or wireless connection to the laser projector. It would also be possible to store the installation guiding projection on a memory card or other storage means for transferring the installation guiding projection to the laser projector.

By projecting the installation guiding projection on at least one of the structural surfaces of the room, an improved and quicker installation of the acoustical system is achieved. Further, non trivial installations, characterized by overlaps, offsets and misaligments of acosutical elements, are made manageable on site. Additionally, for example by using the laser projector for projecting the installation guiding projection the installers have a blueprint that is highly visible for the installers on the structural surface and easily controllable to be used in different environments. Further, an advantage by using the laser projector is that there is a possibility to manually and/or automatically scale and set the display plan of the installation guiding projection. This means that a desired information of the installation guiding projection can be projected in or close to life size. This life size projection is advantageous since small errors in the projection might cause expensive or catastrophic errors. For example, a cumulated error of a few millimeters can become centimeters, resulting in the installer to drill into a power cable or similar when preparing fixation points for the acoustical element.

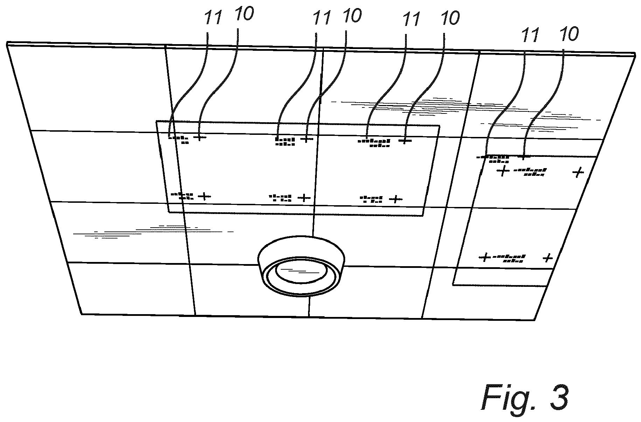

As discussed above, illustrated in figure 2 is an example wherein the installation guiding projection comprises fixation points 10. Another example of what could be included in the installation guiding projection is illustrated in figure 3 which illustrates the fixation points 10 and an identification number 11 associated with at least one of the acoustical elements. Other relevant information that can be included in the installation guiding projection can be a size, a relationship, a context, a cable suspension length, a color and/or a position associated with at least one of said acoustical element. Further, the installation guiding projection may in addition and/or alternatively also comprise, HVAC installation information, luminaire or lighting information, wiring information for the luminaire, audio, electrical and so on. For example, figure 3 illustrates the context of two acoustical elements and their placement around the light fixture. This can be seen by the outlines of the elements, one being arranged in a left-to-right and the other in a top-to-bottom of the plane of the illustrated ceiling. It would also be possible include in the installation guiding projection a surface pattern of the acoustical element such that the surface pattern is aligned in a desired way with for example light sources or windows in the room.

By projection for example the fixation points 10 of the acoustical element the installer can easily see where to drill the fixation points and then later put in fixings, such as soffit fixings. Further, if the projection additionally comprises the identification number the installation of the dedicated element in that place is further aided. Thus, if there is a complex installation of the acoustical system in for example a specific 3D shape or with many different elements, the elements can be individually marked both on them and in the ceiling so that the installer easily can hang them in their correct position to get the desired acoustical environment.

To further aid the installer, the projection of the installation guiding projection may be projected in sequence in a plurality of projections for guiding step by step the installation of the acoustical system. In this way the installation may be guided from a starting area to a finish area in the room. Thus, the installer gets a simpler step by step instruction on how to combine the elements into the complete acoustical system. Further, the sequential projection could also be used to project for example the context by projecting different heights, slopes and orientations for different elements.

Further, the projection may comprise a verification projection on at least one of the acoustical elements subsequent to projecting the guiding projection. Wherein the verification projection is indicative of the position of the at least one of the acoustical elements in accordance with the installation layout. In this way the installer can easily verify if the installation is correct.

In some examples the determining of the acoustical characteristics of the structural surfaces comprises determining an absorption coefficient, air flow resistance, air flow resistivity, diffusivity and/or diffusion of each structural surface of the room. Any of the acoustical properties may be determined by physically measuring and/or assigning from a database comprising acoustical characteristics of different structural surfaces. Further, the desired acoustical environment of the room may comprise a reverberation time, speech clarity, auditory sound strength and/or sound propagation. These are well known acoustical properties of a room and/or acoustical element and can be obtained by many known methods such as for example ISO 3382, ISO 354, ISO 12354 and/or ISO 9053

In some examples the above steps and/or methods is at least partly or fully computer implemented. In an example, there is a method for projecting a guiding projection of an acoustical system in a room of a building defined by structural surfaces, wherein the acoustical system is intended to be attached to at least one structural surface of the structural surfaces of the room. The computer implemented method comprises acquiring room geometry data by a scanning device and/or by retrieving the room geometry data from a building information model (BIM). Determining the acoustical characteristics of the structural surfaces defining the room, calculating, based on the acoustical characteristics and room geometry, a required acoustical characteristic of the acoustical system for obtaining a desired acoustical environment in the room. Selecting acoustical elements for obtaining the required acoustical characteristics, creating an installation layout based on the selected acoustical elements, projecting, by means of a laser projector, an installation guiding projection, based on the installation layout, on the at least one structural surface for guiding the installation of the acoustical system. In an example, a computer program having instructions which when executed by an electronic device cause the electronic device to perform the methods above. Another example, a computer readable medium having stored thereon a computer program according to the methods above.

### Example of an acoustical installation process

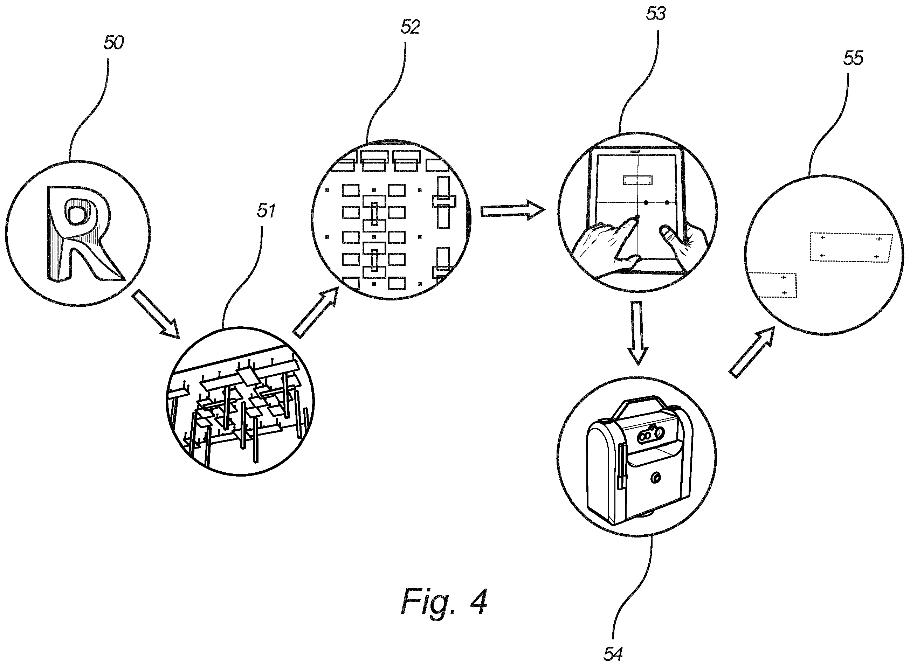

Illustrated in figure 4, is an example of a flowchart of an installation wherein the building information model 50 is used to establish the digital model of the room (a digital twin of the room). The digital model has a size and resolution that is high enough to fulfill the needs of the purpose of installing acoustic ceilings and wall panels. For example, acoustic ceilings and wall panels show a tolerance at installation of approximately 2 to 15 mm and the digital model therefore preferably has at least that resolution.

The geometry and acoustical characteristics are then sorted and structured in a database allowing for multiple and parallel calculations of the acoustical system 51. For example, the calculations may be based on that the geometry and acoustical characteristics are kept constant whereas the acoustical elements are a variable.

In some examples, after a few iterations, the desired configuration is achieved, defined as a certain acoustical element positioned on a certain surface of the room and in a certain quantity. The surface to be covered by the acoustical elements is then included into the digital model and a digital process then activated for that surface for generating automatically the acoustical system in its entirety 52.

In some examples the acoustical system is based on soffit fixings in a 1200x 1200 grid, main runners along a length of the room, perimeter tiles > 300 mm and cross tees 1200 at 1200 cc between the main runners. Based on the above, every acoustical element and the associated elements can be included in the digital model and serve as input data to a client order.

Further, either in parallel or in sequence, an impulse response at a given point of the room can be calculated. The impulse response may be convoluted with an anechoic recording of a voice or a sound source in order to generate for example an ambisonic sound file that can be presented in a stereophonic manner to a client for experiencing the treated room before the room is being installed.

Additionally, the digital model comprising the geometry, the surface texture of the different material types forming the room and their optic properties can be used to calculate a visual rendering of the room in a given lighting condition. Several configurations can be generated in order to compare and validate the visual design such as for example the interplay of grazing light on the ceiling or the effect of a certain luminaire design.

The visual rendering and audio rendering can then also be combined and experienced in a virtual reality device serving for a full validation of the acoustical system.

Following approval of the acoustical system by the client an installer is appointed. The installer is then given access to the digital model, whereby the installer can use the digital model for simulation and testing the planning and phasing of the project 53. Further it would also be possible to simulate and test any logistics and supply, based on size, form factor and quantity of the different cartons to be delivered or completion of other trades' work.

Following, a selection is made of a starting zone of where to start the installation of the acoustical system. Within the starting zone, a sequencing is chosen, defining in what order the acoustical elements are to be installed. With the help of for example numbering, contextualizing information, color codes, soffit fixing points, panel ID, cable length and other tags, the digital model can be further improved.

The installer can then bring the digital model and upload or stream the digital model to the laser projector 54 such that the information in the digital model is then projected onto the rooms' surfaces 55. For example, by projecting soffit fixing points, panel ID or cable length. The information can be presented superposed or separated.

The projection is can be as discussed above from the laser projector which is calibrated and levelled compared to a virtual layout grid system (reference points) and the laser projector projects a 1/1 representation of the digital model. By position the laser projector in space at dedicated points, there is a consistency in the projection. This also allows for the device to be moved around in order to secure a good contrast with a desired accuracy.

Thus, the information of the digital model being presented directly on the buildings surface removes a need for the installer to flip back and forth from a plan drawing "seen from above" whilst looking at for example the ceiling during installation, from below.

Further, the information being projected can be modified on site in order to handle with any discrepancies between the digital model and reality. This could for example be that the installer changes elements of the layout, in formation or as singular elements which then can be translated and/or rotated in order to be moved into a suitable position and projected more or less in real time. The same can be applied in case of conflicts between soffit fixings and expansion joints between concrete elements of the ceiling and in the case of using a prefabricated slab for the concrete elements. Other building equipment can also be interfering with the desired installations, such as for example HVAC, electrical, water and so on.

The installer can also easily verify and control for example the identity of panel (type, size, color) and the position of acoustical element (altitude/ceiling height, slope relation to original digital model).

Additionally, document discrepancies can be identified and reinput into the digital model so that becomes a more accurate digital twin of the actual room.

## Claims

1. A method for installation of an acoustical system in a room of a building defined by structural surfaces, wherein the acoustical system is intended to be attached to at least one structural surface of the structural surfaces of the room, the method comprising:
- acquiring a room geometry by scanning the room and/or by retrieving the room geometry data from a building information model (BIM);
- determining the acoustical characteristics of the structural surfaces defining the room;
- calculating, based on the acoustical characteristics and room geometry, a required acoustical characteristic of the acoustical system for obtaining a desired acoustical environment in the room;
- selecting acoustical elements for obtaining the required acoustical characteristics;
- creating an installation layout based on the selected acoustical elements;
- projecting, by means of a laser projector, an installation guiding projection, based on the installation layout, on the at least one structural surface for guiding the installation of the acoustical system.

2. The method according to claim 1, wherein the installation guiding projection comprises fixation points, size, an identification number, a relationship, a context, cable suspension length and/or position associated with at least one of said acoustical elements.

3. The method according to claim 1 or 2, wherein projecting the installation guiding projection comprises projecting in sequence a plurality of projections for guiding step by step the installation of the acoustical system.

4. The method according to any one of the preceding claims, further comprising projecting a verification projection on at least one of the acoustical elements subsequent to projecting the guiding projection, wherein the verification projection is indicative of the position of the at least one of said acoustical elements in accordance with the installation layout.

5. The method according to any one of the preceding claims, wherein the determining of the acoustical characteristics of the structural surfaces comprises determining an absorption coefficient, air flow resistance, air flow resistivity, diffusivity and/or diffusion of each structural surface of the room.

6. The method according to any one of the preceding claims, wherein the desired acoustical environment of the room comprises a reverberation time, speech clarity, auditory sound strength and/or sound propagation.

7. The method according to any one of the preceding claims, wherein the acoustical system is an acoustical absorption system.

8. A computer implemented method for projecting a guiding projection of an acoustical system in a room of a building defined by structural surfaces, wherein the acoustical system is intended to be attached to at least one structural surface of the structural surfaces of the room, the method comprising:
- acquiring a room geometry by scanning the room and/or by retrieving the room geometry data from a building information model (BIM);
- determining the acoustical characteristics of the structural surfaces defining the room;
- calculating, based on the acoustical characteristics and room geometry, a required acoustical characteristic of the acoustical system for obtaining a desired acoustical environment in the room;
- selecting acoustical elements for obtaining the required acoustical characteristics;
- creating an installation layout based on the selected acoustical elements;
- projecting, by means of a laser projector, an installation guiding projection, based on the installation layout, on the at least one structural surface for guiding the installation of the acoustical system.

9. The computer implemented method according to claim 7, wherein the installation guiding projection comprises fixation points, size, an identification number, a relationship, a context, cable suspension length and/or position associated with at least one of said acoustical elements.

10. The computer implemented method according to claim 1 or 2, wherein projecting the installation guiding projection comprises projecting in sequence a plurality of projections for guiding step by step the installation of the acoustical system.

11. The computer implemented method according to any one of the preceding claims, further comprising projecting a verification projection on at least one of the acoustical elements subsequent to projecting the guiding projection, wherein the verification projection is indicative of the position of the at least one of said acoustical elements in accordance with the installation layout.

12. The computer implemented method according to any one of the preceding claims, wherein the determining of the acoustical characteristics of the structural surfaces comprises determining an absorption coefficient, air flow resistance, air flow resistivity, diffusivity and/or diffusion of each structural surface of the room.

13. The computer implemented method according to any one of the preceding claims, wherein the desired acoustical environment of the room comprises a reverberation time, speech clarity, auditory sound strength and/or sound propagation.

14. A computer program having instructions which when executed by an electronic device cause the electronic device to perform the method according to claims 8-12.

15. A computer readable medium having stored thereon a computer program according to claims 8-12.
